# EUROPEAN PATENT SPECIFICATION

(11) **EP 3 269 601 B1**
(45) Date of publication and mention of the grant of the patent: **06.02.2019**
(21) Application number: 16179449.0
(22) Date of filing: 14.07.2016
(51) Int. Cl.: B60R 9/055, B60R 9/04

(54) **LID LIFTER FOR ASSISTING THE OPENING OF A LID OF A ROOF BOX AND ROOF BOX**
DECKELHEBEL ZUR UNTERSTÜTZUNG DER ÖFFNUNG EINES DECKELS EINES DACHKOFFERS UND DACHKOFFER
POUSSOIR DE COUVERCLE POUR AIDER À L'OUVERTURE D'UN COUVERCLE DE COFFRE DE TOIT ET COFFRE DE TOIT

(43) Date of publication of application: 17.01.2018
(73) Proprietor: Thule Sweden AB, 330 33 Hillerstorp (SE)
(72) Inventor: Lindell, Morgan, 33135 Värnamo (SE); Tüylüce, Abdurrahman, 85356 Freising (DE); Andersson, Joakim, 334 32 Anderstorp (SE)
(74) Representative: Wallentin, Lars

(56) References cited:
- EP-A1- 2 689 967
- DE-A1- 19 801 681
- DE-A1-102006 042 081
- DE-U1- 9 314 977

## Description

### TECHNICAL FIELD

The technical field relates to a lid lifter for assisting the opening of a lid of a roof box and to a roof box comprising such a lid lifter.

### BACKGROUND

Roof boxes are widely known in the market for providing additional carrying space to vehicles in order to be able to carry more cargo than the vehicle is designed to carry.

Such roof boxes typically comprise a pan-shaped base and a lid provided on the pan-shaped base wherein a carrying space of the roof box is formed between the pan-shaped base and the lid. In order to provide access to the carrying space of the roof box, the lid is hingedly coupled to the pan-shaped base. In order to access the carrying space, a user can pivot the lid into an open position. In order to enhance the usability, it is known to use lid lifters for assisting the user in handling the lid. For example, it is known to provide lid lifters exerting an assistive force on the lid in order to facilitate the lifting of the lid. Another known feature of such lid lifters is to keep the lids in the open position in order to allow the user to easily pack the roof box. EP 2 689 967 A1 discloses a state of the art lid lifter for assisting the opening of a lid of a roof box for a vehicle.

Accessories like roof boxes need special attention with respect to safety as it is desired that the roof box and its contents remain on the roof of the vehicle in crash situations.

Accordingly, it is desirable to at least address the foregoing and it is the object of the invention to provide an enhanced lid lifter which improves the safety of roof boxes in crash situations as well as to provide a roof box with improved safety.

In addition, other desirable features and characteristics will become apparent from the subsequent summary and detailed description, and the appended claims, taken in conjunction with the accompanying drawings and this background.

### SUMMARY

The object of the invention is solved by a lid lifter according to claim 1 and a roof box according to claim 15. Advantageous further formations are set out in the dependent claims.

Described in a first aspect of the present invention is a lid lifter for assisting the opening of a lid of a roof box for a vehicle.

In the present context, assisting can mean that an assistive force is provided by the lid lifter which assists the user in moving or pivoting the lid of the roof box in opening and/or closing direction so that the user needs less force to move the lid. Furthermore, assisting can also mean that the lid lifter assists the user in holding the lid in an open position.

The lid lifter comprises a first link and a second link rotatably coupled to each other at a respective first end portion and rotatably couplable to the lid or a base of the roof box at a respective second end portion.

The first link and the second link can be elements or assemblies which are able to transfer force from their respective first end to their respective second end. In particular, the first link and the second link can be realized in the form of a lever or an arm which are hingedly couplable to further elements at their respective ends. The first link and the second link can comprise rigid force transfer bodies and can be rod- or pole-shaped, for instance. Of course, the first link and the second link can comprise different shapes. Furthermore, it is possible that one of the first link and the second link is formed such that it is able to accommodate at a portion of the other link.

In order to provide a rotatable coupling between the first link and the second link the respective first ends of the links can be specifically designed. For example, one of the first link and the second link can comprise a pivot pin attached on or integrally formed with the same and the other one of the second link and the first link can comprise an opening forming a bearing for accommodating the pivot pin therein. The respective second ends of the links can be configured similarly and provide for a suitable coupling to the lid or the base.

The lid lifter comprises a force application mechanism for applying an assistive force on the first link or the second link wherein the force application mechanism is provided on at least one of the first and second links. Advantageously, the force application mechanism is configured to provide at least an urging force for urging the lid towards an open position. Furthermore, the force application mechanism can be provided on the first link or the second link. It is also possible that elements of the force application mechanism are provided on different links so that some elements of the force application mechanism are provided on the first link and some elements of the force application mechanism are provided on the second link.

The lid lifter further comprises a primary retaining structure for accommodating elements of the force application mechanism. Accordingly, the primary retaining structure provides a space for accommodating elements of the force application mechanism such that these elements are protectively accommodated. Such a protective accommodation, e.g. an encapsulation, is beneficial as it prevents objects or other elements not being part of the force application mechanism to interact with parts of the force application mechanism in an undesired way and prevents elements of the force application mechanism from detaching from the force application mechanism. Accordingly, as long as the primary retaining structure is intact elements of the force application mechanism cannot detach from the lid lifter. Consequently, the primary retaining structure provides a first barrier for parts of the force application mechanism.

Furthermore, the lid lifter according to the invention comprises a secondary retaining structure for preventing at least one of the elements of the force application mechanism from coming off of the lid lifter in case of a failure of the first retaining structure. A failure of the first retaining structure can be a breakage of the first retaining structure or any other condition allowing elements of the force application mechanism to escape the first retaining structure. Such a breakage of the first retaining structure may be caused in crash situations by cargo carried in the roof box. More precisely, in case of a crash of the vehicle, cargo carried in the roof box can hit the lid lifter leading to a breakage of the same and allowing parts inside the primary retaining structure to escape the same. In such a case, the secondary retaining structure can be still operative and can prevent parts escaping the primary retaining structure from escaping the secondary retaining structure and consequently from coming off of the lid lifter.

Accordingly, the lid lifter has an improved safety and fulfills very high crash test safety demands by providing a second retaining structure or barrier.

According to an embodiment of the present invention, the secondary retaining structure can comprise an encasing portion at least partially encasing the primary retaining structure.

Thus, an encasing portion of the secondary retaining structure can encase a portion of the primary retaining structure or the whole primary retaining structure.

For example, the encasing portion can at least locally encase a portion of the primary retaining structure which tends to break in case it is hit by cargo transported in the roof box in a crash situation. Hence, in case the primary retaining structure breaks and an opening is generated through which parts of the force application mechanism could escape, the encasing portion surrounds the primary retaining structure at that portion and prevents parts of the force application mechanism from escaping and coming off of the lid lifter.

According to a further example, the encasing portion can encase or encapsulate the whole primary retaining structure and optionally even the first and the second link of the lid lifter. For example, the secondary retaining structure can comprise a tube-like structure which can be slid on the lid lifter or can comprise a configuration allowing to generate such a tube-like structure by wrapping said secondary retaining structure around the desired portion of the lid lifter.

In a further embodiment of the present invention, the secondary retaining structure can be integrally formed with the primary retaining structure.

In the present context, integrally formed means that at least a portion of the secondary retaining structure is non-releasably and fixedly joined to the primary retaining structure by bonding or co-injection, for instance. In other words, portions of the secondary retaining structure can be locally fixed to the primary retaining structure or wide areas or even the whole secondary retaining structure can be integrally formed on the primary retaining structure. Co-injection is a preferably way for integrally forming the secondary retaining structure on the primary retaining structure. This means that the primary and the secondary retaining structure can be formed by injecting two materials in the same mold. In this way, it is possible to combine the mechanical properties of two different materials allowing a configuration in which the primary and the secondary retaining structure have different mechanical characteristics. For example, it is possible to provide the primary retaining structure with a high rigidity allowing a force transfer and to provide the secondary retaining structure with an elastic material having a good breakage resistance.

According to a further advantageous embodiment of the present invention, the encasing portion comprises a fabric material or an elastic material, e.g. rubber or a rubber-like material, wherein the fabric material is preferably stretchable. The fabric material can be woven from plastic fibers, for instance.

In a further advantageous embodiment, the secondary retaining structure is fixed to at least the first and the second end portion of the one of the first and the second links on which the force application mechanism is provided.

For example, the secondary retaining structure spans a distance between the first and the second end portion of the link and thus an area in which elements of the force application mechanism are provided. In other words, the secondary retaining structure, in particular the encasing portion of the secondary retaining structure, covers the link comprising the force application mechanism between the first and the second end portion of the link. In such a configuration, the link, in particular the primary structure of the link, is covered by the secondary retaining structure to a great extent. Thus, in case the primary retaining structure breaks between both end portions of the link, the secondary retaining structure is able to catch a part of the force application mechanism escaping the primary retaining structure and/or other parts disassembling from the link or the primary retaining structure such that these elements or parts cannot come off of the lid lifter. In this way, it is reliably prevented that parts of the lid lifter disassemble from the lid lifter and escape the roof box or fly around in a crash situation.

According to a further embodiment of the present invention, at least the second end portion is reinforced.

As mentioned above, the second end portion of the first and the second link is couplable to the base or the lid of the roof box. Thus, in case the second end portions of both links are reinforced, a more durable coupling of the lid lifter with the base and the lid can be achieved. Furthermore, with reinforced second ends, a greater force can be transferred from the links to the lid and the base, respectively. Hence, even if the coupling at the first ends is decoupled due to a failure, e.g. caused by cargo hitting the lid lifter, the links will remain secured to the lid and the base, respectively, and not separate from the roof box. A reinforcement can be provided by locally increasing the thickness of the material and/or by providing reinforcing ribs or sections in the second portions, for instance. It is also conceivable to use more durable materials in the second end portions.

In a further preferable embodiment of the present invention, the second retaining structure is at least partially made from a material having a Young's modulus smaller than the Young's modulus of a material of the first retaining structure and preferably made from an elastic material.

Accordingly, the material of the second retaining structure can comprise a higher ductility compared to the material of the first retaining structure. With such a configuration, the material of the first retaining structure can be rigid and/or brittle. The Tensile strength at break of the second retaining structure can be equal to or smaller than 30 Mpa and is preferably smaller than 10 Mpa. Furthermore, the Tensile strength at break of the second retaining structure can be 30% of the Tensile strength at break of the first retaining structure or smaller, preferably smaller than 20% of the Tensile strength at break of the first retaining structure, which is preferably greater than 50 MPa. Alternatively, the first retaining structure preferably has an elongation break at 60% and the second retaining structure an elongation break at 600%. Accordingly, the material of the second retaining structure is more deformable than the material of the first retaining structure. Thus, in case of a crash in which cargo hits the lid lifter, the primary retaining structure could break while the secondary retaining structure is able to withstand the impact of the cargo by deformation.

According to a further preferable embodiment, the secondary retaining structure comprises a coupling portion for coupling the at least one of the elements of the force application mechanism to the second end portion.

The coupling portion can be realized in various different ways. In a preferable embodiment, the coupling portion is integrally formed in the at least one of the elements of the force application mechanism and is engaged with the second end portion. The coupling portion can be formed in a hook-like manner. For example, in case the element of the force application mechanism is a spring, e.g. a spiral spring, the coupling portion can be formed in one of the ends of the spring wire, e.g. in the form of a hook. In other words, the spring wire end can be bent to comprise a hook-like shape. This hook-like end of the spring can be engaged with a corresponding receiving portion formed in the second end portion.

In a further preferable embodiment, the coupling portion is adapted to couple the at least one of the elements of the force application mechanism such that a movement of the at least one of the elements is allowed to a predetermined extent and a further movement is blocked.

For example, the coupling portion can be wire or rope-like and/or can in particular be bendable and flexible, respectively. Furthermore, the coupling portion can be inelastic or comprise a certain degree of elasticity. If such a coupling portion couples an element of the force application mechanism to the second end portion, the element can move within a range which is limited by the length of the coupling portion.

According to a further embodiment of the present invention, the coupling portion can comprise a flexible force transfer member adapted to transfer a tensile force only wherein the force transfer member has a predetermined length and is coupled to the second end portion at one end and coupled to the at least one of said elements of said force application mechanism at its other end, wherein the force transfer member preferably comprises a wire. In this way, the element is movable until the force transfer member is tensioned and prevents a further movement of the element.

In an advantageous embodiment, the force application mechanism comprises a spring, preferably a coil spring, and a force application member urged by the spring and being adapted so as to transfer an urging force of the spring on a force receiving portion of the one of the links receiving the force.

The force application member can comprise a recess for accommodating an end portion of the spring or the spring can be fixed to or held on the force application member in another way. For example, the force application member can be guided in a housing as described above e.g. movable linearly towards and away from the second end portion. With such a configuration, the spring can be arranged between the force application member and the second end portion and is consequently inescapably held between these parts or portions.

If a flexible force transfer member as described above is used for coupling one of the coil spring or the force application member to the second end portion the flexible force transfer member, it is possible to pass the flexible force transfer member through the interior of the spring and to couple one end with the second end portion and the other end with the force application member. In this way, the force application member and the spring are secured together on the second end portion. In other words, as long as the force application member is coupled to the second end portion in this way, the spring cannot come off of the flexible force transfer member.

As an alternative or additional securing measure, the spring itself can be provided with a hook-like coupling portion, i.e. an end portion of the spring wire can be formed hook-like and this portion can be engaged with the second end portion as was already described above. This provides additional security to the overall lid lifter as the spring cannot come off of the second end portion even if the force application member disengages from the flexible force transfer member. In either case, the overall safety of the lid lifter is enhanced by providing a secondary retaining structure comprising a coupling portion as described above.

According to a further preferable embodiment, the primary retaining structure comprises a housing wherein the housing comprises a guiding structure at least guiding the force application member linearly movable towards and away from the first end portion. The housing can comprise two housing halves. Furthermore, the housing itself can form the first or the second link. As described above, the guiding structure can be configured to linearly guide an element of the force application mechanism like the force application member. For that purpose, the housing can comprise ribs integrally formed therewith or other guiding elements which are fixed or formed on the housing. If the housing consists of two housing halves, elements of the guiding structure can be provided on both halves such that in a mounted condition in which the two housing halves are fixed to each other, the guiding structure is generated by arranging these elements with respect to each other, e.g. facing each other. The housing halves can be made from plastics, in particular by resin injection.

According to a further embodiment of the present invention, the force application member comprises a widening portion widening the force application member in a direction perpendicular to the movement direction thereof so that a width dimension of the force application member is enlarged to a predetermined dimension defining a minimum opening necessary in the primary retaining structure for the force application member to escape the primary retaining structure. With this measure, the force application member cannot escape the primary retaining structure in case a small opening or rupture is generated caused by a failure of the primary retaining structure in a crash situation.

According to a further aspect of the present invention, a roof box is provided comprising a base and a lid pivotally coupled to the base. The roof box further comprises at least two lid lifters as described before for assisting an opening movement of the lid with respect to the base.

Additional features and advantages may be gleaned by the person skilled in the art from the following description of exemplary embodiments, which are not to be construed as limiting, however, drawing reference to the attached drawings.

### BRIEF DESCRIPTION OF THE DRAWINGS

The present invention will hereinafter be described in conjunction with the following drawing figures, wherein like numerals denote like elements, and:
Fig. 1 shows a roof box comprising two lid lifters;
Fig. 2 shows a perspective view of a lid lifter according to an embodiment of the present invention;
Fig. 3 shows the lid lifter of Fig. 2 in a side view and in an opened condition;
Fig. 4 shows a sectional view of the lid lifter in a closed condition;
Fig. 5 shows a sectional view of the lid lifter in the opened condition;
Fig. 6 shows a perspective view of a first link of the lid lifter as shown in Figs. 2-5;
Fig. 7 shows a sectional view of a first link of a lid lifter according to a further embodiment of the present invention;
Fig. 8 shows a perspective sectional view of a second end portion of the first link of Fig. 7;
Fig. 9 shows a perspective and partially sectional view of a lid lifter according to a further embodiment of the present invention;
Figs. 10 to 12 show different configurations of a secondary retaining structure of lid lifters according to further embodiments of the present invention; and
Fig. 13 shows a modification of a force application member of the lid lifter according to an embodiment of the present invention.

All figures are only schematic depictions of exemplary embodiments in which, in particular, distances and dimensional correlations are not presented to scale.

### DESCRIPTION OF EMBODIMENTS

The following detailed description is merely exemplary in nature and is not intended to limit application and uses. Furthermore, there is no intention to be bound by any theory presented in the preceding background or summary or the following detailed description.

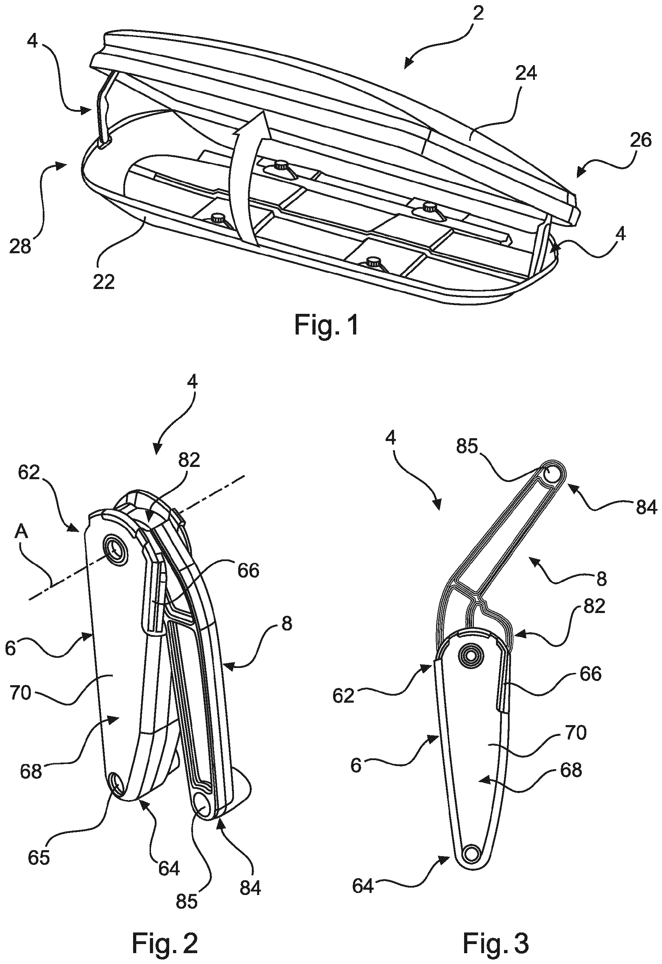

Fig. 1 shows a roof box 2 comprising a base 22 and a lid 24 hingedly coupled to the base 22. The roof box 2 extends in a longitudinal direction and comprises a front end 26, also referred to as nose, and a back end 28. The roof box is mountable to a vehicle such that the longitudinal direction of the roof box 2 is arranged substantially parallel with the longitudinal direction of the vehicle. In order to assist in opening and closing the lid 24, two lid lifters 4 are provided on the roof box 2, one at the nose 26 and one at the back end 28.

Fig. 2 shows a perspective view of a lid lifter 4 according to an embodiment of the present invention. The lid lifter 4 comprises a first link 6 and a second link 8 which are coupled to each other at their respective first end portion 62, 82. The links can also be referred to as arms of the lid lifter 4 or lid lifter arms. As can be gathered from Fig. 2, the second link 8 is coupled to the first link 6 rotatable about a rotation axis A, in particular rotatable between a closed position as shown in Fig. 2 and an open position as shown in Fig. 3.

The first link 6 and the second link 8 further comprise second end portions 64, 84 which are configured such that these portions can be mounted to the lid 24 or the base 22 of the roof box 2. According to the embodiment, the second end portion 64 of the first link 6 is adapted to be coupled to the base 22 of the roof box 2 and the second end portion 84 of the second link 8 is configured to be coupled to the lid 24 of the roof box 2. For that purpose, the second end portions 64, 84 comprise fixation openings 65, 85 adapted to receive a fixation bolt.

As is further shown in Fig. 2 and Fig. 3, the lid lifter 4 comprises a housing 66 for accommodating a force transfer mechanism as well as the second end portion 82 of the second link 8. The housing 66 forms a primary retaining structure according to the invention. In other words, the housing 66 houses the elements of the force application mechanism such that they cannot escape from an interior space in the housing 66 under normal circumstances. Consequently, the housing 66 forms a first barrier for the elements of the force application mechanism.

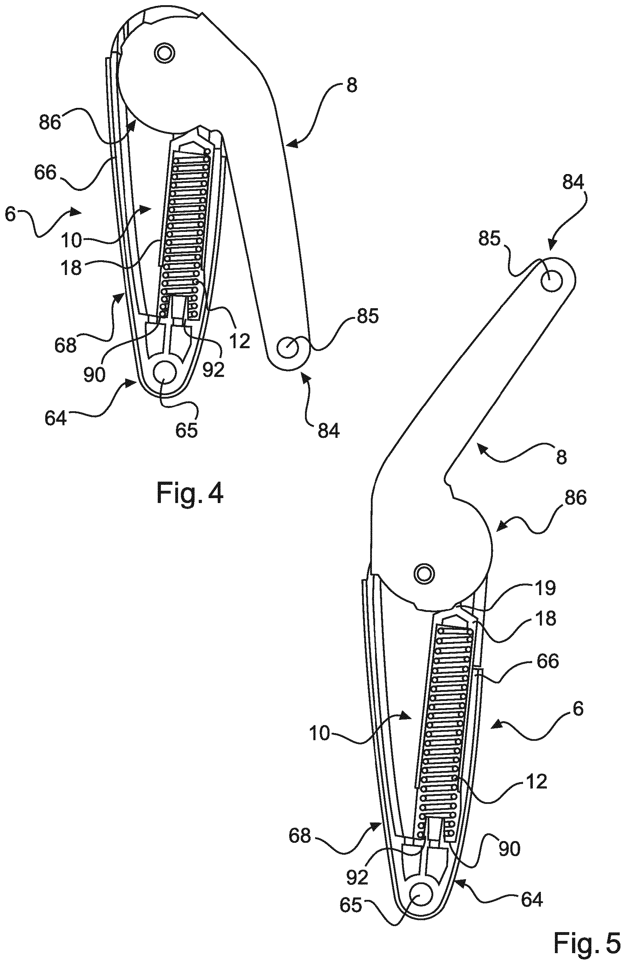

The interior structure of the lid lifter 4 is shown in Figs. 4 and 5 which show sectional views of the lid lifter 4 in a closed condition and an opened condition, respectively. As already described above, a force application mechanism 10 is accommodated in the housing 66. The force application mechanism 10 comprises a force application member 18 and a spring 12 accommodated in a recess of the force application member 18 on one side and supported against the second end portion 64 at the other side. For that purpose, the second end portion 64 comprises a supporting surface 90 against which the spring 12 is supported and a protrusion 92 about which an end portion of the spring 12 is arranged The force application member 18 comprises a force application portion 19 which is urged against a force receiving portion 86 of the second link 8. The force receiving portion 86 is shaped such that the application of a force on the same by means of the force application member 18 leads to an assisting force in an opening direction or a closing direction.

Referring back to Fig. 1, in case of a crash, cargo carried in the roof box 2 tends to move in the longitudinal direction of the roof box 2 and to hit a lid lifter 4. The impact can break the housing 66 or generate a rupture in the material of the housing 66 which could lead to an opening in the housing 66 through which the elements of the force application mechanism can escape. In other words, the impact can cause a failure of the housing 66.

In order to ensure that no parts can come off of the lid lifter 4 even if the housing 66 breaks, a secondary retaining structure 68 comprising an encasing portion 70 which partly encloses the housing 66 is provided. The secondary retaining structure 68 is able to catch parts which in case of the crash would otherwise fly around in case the housing 66 breaks. In order to be able to do that, the secondary retaining structure 68 is constructed break-proof in that a material is used for the secondary retaining structure 68 which is elastically or plastically deformable. In this way, the secondary retaining structure 68 can withstand an impact of cargo in case of a crash and is able to hold broken off parts of the housing together thereby providing a second barrier blocking preventing elements from coming off of the lid lifter 4. Accordingly, the first link 6 comprises a rigid housing 66 which comprises good force transfer capabilities and an elastically or plastically deformable casing on the housing 66, said casing forming the secondary retaining structure 68.

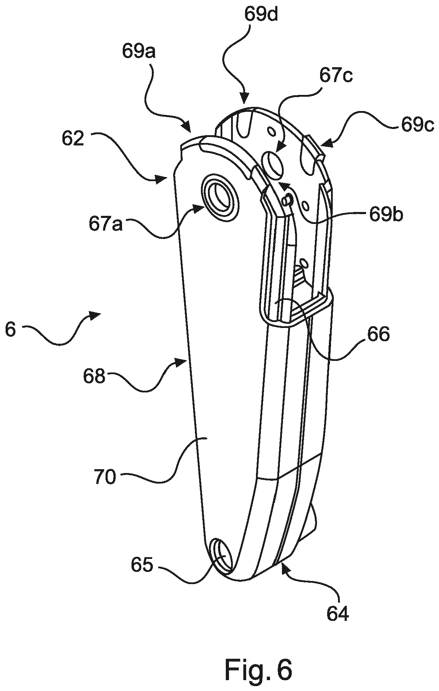

The construction of the first link 8 is shown in Fig. 6 in greater detail. The housing 66 is almost fully covered by the secondary retaining structure 68. The secondary retaining structure 68 is a layer 70 of rubbery material which is fixed to the housing 66 by bonding. It is also possible to co-inject the layer 70 with the housing 66 upon manufacturing the housing 66. In the present embodiment, the secondary retaining structure 68 has a bag-like shape which is closed at the bottom, i.e. on the lower side shown in Fig. 6, and open at the opposite side. The housing 66 is accommodated therein such that openings 65, 67a, 67c provided in the housing 66 are aligned with corresponding openings in the secondary retaining structure 68. The secondary retaining structure 68 comprises fixation section 69a-d for fixing the secondary retaining structure 68 to the first end portion 62 of the first link 6. In the present embodiment, the fixation sections 69a-d are extensions which encompass portions of the first end portion 62 of the first link 6 and are bonded to the housing 66. In this way, the housing is fixedly accommodated in the secondary retaining structure 68. The secondary retaining structure does, however, not have to be bag-like shaped. In other words, the secondary retaining structure could also be open on the lower side in Fig. 6 so that the housing 66 would be partially visible there. It is also possible to only cover a predetermined portion of the housing which bridges the first end portion 62 and the second end portion 64. The portion of the housing 66 between both end portions may be weaker in structure and can be more prone to break. The first end portion 62 and the second end portion 64 are reinforced according to the embodiment as they are configured for a force transfer to other elements and, therefore, need to withstand corresponding loads.

According to the embodiment, the secondary retaining structure 68 is not bonded to the housing 66 at least in a portion between the first end portion 62 and the second end portion 64. In this way, the material of the secondary retaining structure 68 is able to flex, stretch or elongate over a greater length so that it is possible for the material to take up more energy compared to the case where the secondary retaining structure 68 is bonded to the housing 66 along its entire length. The material of the secondary retaining structure 68 according to the embodiment is preferably a thermoplastic elastomer which is soft and/or flexible.

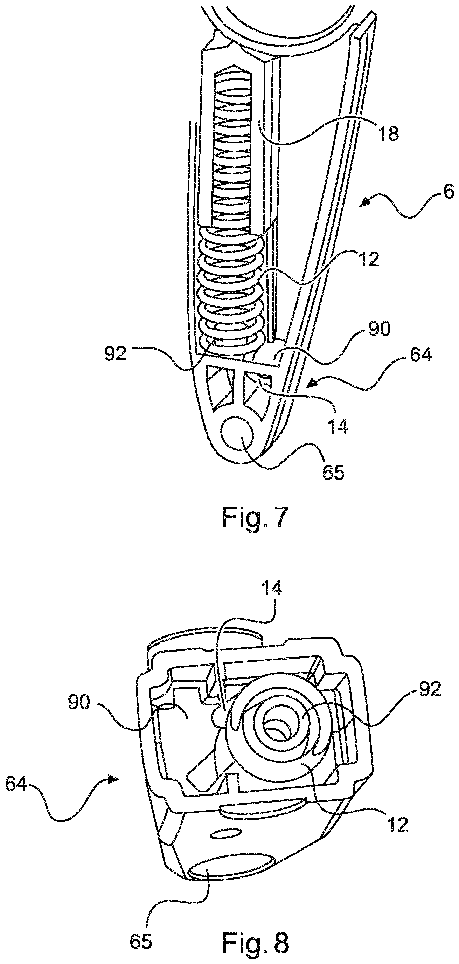

A further embodiment of the present invention is shown in Figs. 7 and 8. Contrary to the embodiment is described above, the secondary retaining structure according to this embodiment does not comprise an encasing portion that encases the housing 66. In this embodiment, the secondary retaining structure comprises a coupling portion which couples the spring 12 to the second end portion 64. More precisely, the spring 12 is formed such that it comprises a hook-like section at the end of the spring 12 which is rested against the supporting surface 90. The hook-like section 14 of the spring 12 is passed through an opening (not shown) formed in the supporting surface 90 and in this way fixed to the second end portion 64. In this way, the spring 12 as an element of the force application mechanism is coupled to a portion of the first link 6 which is advantageously reinforced.

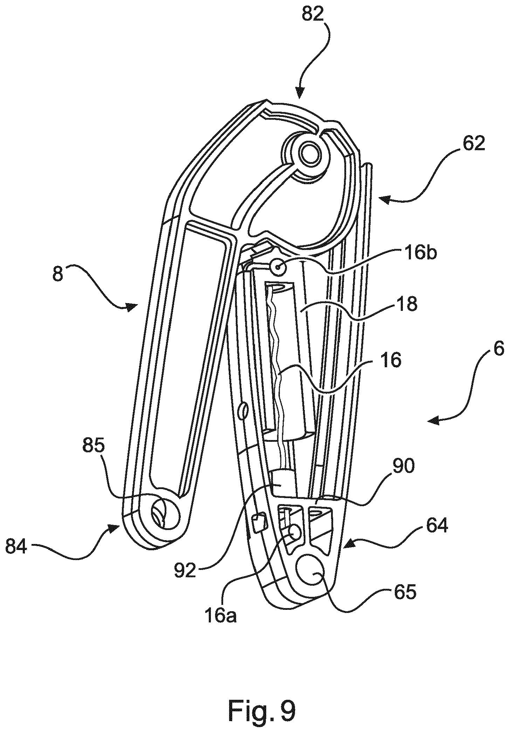

A further embodiment in which the secondary retaining structure comprises a coupling portion for fixing an element of the force application mechanism 10 to the second end portion 64 of the first link 6 is now described with reference to Fig. 9. The construction of the lid lifter differs from the construction of the lid lifter as shown in Figs. 7 and 8 in that instead of the spring 12, the force application member 18 is coupled to the second end portion 64 of the first link 6. The coupling portion according to this embodiment is realized by way of a wire 16 which is fixed to force application member 18 at a first end 16b and fixed to the second end portion 64 at a second end 16a and passed through the interior of the force application member 18 and an interior portion of a spring (not shown). The wire 16 forms a flexible force transfer member and has a predetermined length. In this way, the wire allows the force application member 18 to move a predetermined distance only, i.e. limits the movability of the force application member. In this way, the force application member is prevented from coming off of the second end portion 64 of the first link 6. Thus, in case of a crash in which the housing 66 guiding the force application member 18 is damaged, the wire will still secure the force application member 18 to the second end portion 64 although the housing 66 would not be able to retain the force application member 18 any longer.

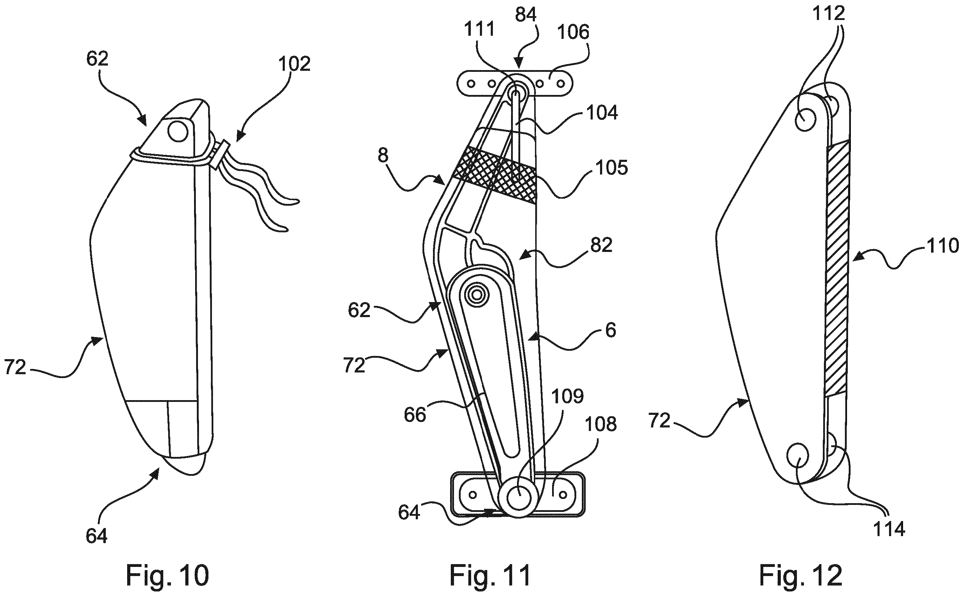

Further embodiments of possible configurations of the secondary retaining structure are shown in Figs. 10 to 12. The configurations are based on the encasing principle as described above with respect to Figs. 2 to 6. More precisely, the configurations as shown in Figs. 10 to 12 also encase portions of the lid lifter in order to provide a second retaining barrier.

The configuration as shown in Fig. 10 shows a secondary retaining structure with an encasing portion 72 in the form of a tube-like fabric open on opposite ends. The opening provided on the lower side of the encasing portion 72 as shown in Fig. 10 is smaller than the maximum width of the first link and the opening provided on the upper side of the encasing portion 72 comprises a variable dimension which can be varied from a state in which the opening is greater than the maximum width of the first link to a smaller dimension. A dimension adjusting mechanism in the form of an adjustable rope loop 102 is provided on the upper end of the encasing portion 72. With this configuration, it is possible to slip the encasing portion 72 on the first link 6 prior to mounting the same to further elements so that the encasing portion encases at least a middle section of the link and to fix the encasing portion by tightening the rope loop 102 for reducing the size of the opening.

Fig. 11 shows a configuration in which the encasing portion 72 is provided around the first and the second link 6, 8. Here, only the outline of the encasing portion 72 is shown in order to render the interior of the encasing portion 72 visible. Again, the encasing portion 72 can comprise a bag-like configuration but covers both links or at least portions of both links 6, 8. The encasing portion can comprise a fabric, a stretch material or a net. A reinforced section 105, e.g. an additional fabric layer, can be provided on an upper portion of the encasing portion 72 in order to provide a connecting portion at which a tensioning member 104, preferably a rope, can be attached. The other end of the tensioning member 104 is fixed to the second end portion 84, more precisely to a pin 111 fixing the second link 8 to a fixation structure 106 mounted on the lid of the roof box. In this way, the encasing portion 72 is variable and flexible and allows a movement of the respective links. The reinforced section 105 can slide along the second link 8 and the tensioning member 104 ensures that the encasing portion 72 always covers the links in an optimum way. The second end 64 of the first link 6 is coupled to a fixation structure 108 provided on the base of the roof box by means of a fixation bolt 109. Hence, a reliable second barrier is provided which is able to catch parts coming off of the force application mechanism or other elements of the lid lifter in case of a crash.

In Fig. 12, an encasing portion 72 is shown which is configured to encase a housing of the lid lifter in which the force application mechanism is provided. The encasing portion 72 comprises openings 112 and 114 to be aligned with corresponding openings in the housing and comprises a Velcro fastening section 110 allowing to form the encasing portion 72 into a tube-like shape. The function of the encasing portion 72 as shown in Fig. 12 is similar to that shown in Fig. 10 and differs in the attachment principle only. With the configuration as shown in Fig. 12, it is easy to upgrade existing lid lifters with a secondary retaining structure.

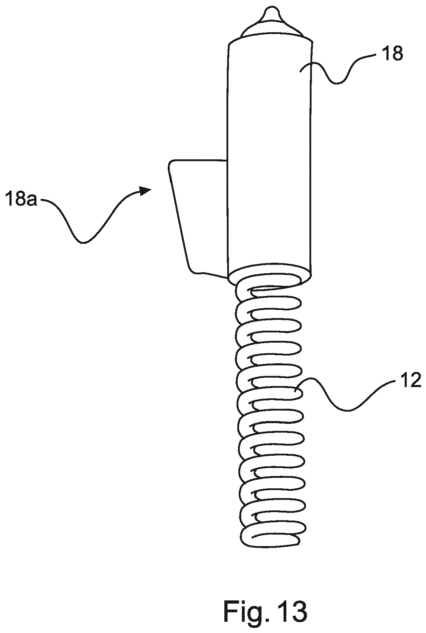

A modification of the above described force application member 18 is shown in Fig. 13. The modified force application member 18 comprises a protrusion 18a widening the overall dimension of the force application member 18. More precisely, the protrusion 18a widens the dimension of the force application member in a direction perpendicular to the movement direction thereof so that a width dimension of the force application member is enlarged to a predetermined dimension defining a minimum opening necessary in the primary retaining structure for the force application member to escape the primary retaining structure, i.e. the housing 66. If such a modified force application member 18 is used in a configuration as shown in Figs. 4 and 5, the modified force application member 18 would be arranged such that the protrusion is located on the left side in Figs. 4 and 5. Thus, in case a gap is generated between the second link 8 and the force application member 18, e.g. due to a deformation of the housing 66 in a crash situation, the force application member 18 would still be prevented from escaping the interior of the housing 66 through the gap as the protrusion 18a would abut against the force receiving portion 86 of the second link 8.

The above described secondary retaining structures can be suitably combined in order to enhance the safety of the lid lifter. For example, the spring of the force application mechanism can be hooked to the second end portion of a link and an encasing portion can be additionally provided around the housing. Likewise, the force application member can be coupled to the second end portion thereby coupling the force application member and the spring to the second end portion, and an encasing portion can be provided on the housing. In conclusion, it is pointed out that terms like "comprising" or the like are not intended to rule out the provision of additional elements or steps. Let it further be noted that "a" or "an" do not preclude a plurality. In addition, features described in conjunction with the different embodiments can be combined with each other however desired. It is also noted that the reference numbers in the claims are not to be construed as limiting the scope of the claims. Moreover, while at least one exemplary embodiment has been presented in the foregoing summary and detailed description, it should be appreciated that a vast number of variations exist.

## Claims

1. Lid lifter (4) for assisting the opening of a lid (24) of a roof box (2) for a vehicle, said lid lifter (4) comprising
a first link (6) and a second link (8) rotatably coupled to each other at a respective first end portion (62, 82) and rotatably couplable to said lid (24) or a base (22) of said roof box (2) at a respective second end portion (64, 84),
a force application mechanism (10) for applying an assistive force on said first link (6) or said second link (8), said force application mechanism (10) being provided on at least one of said first and second links (6, 8),
a primary retaining structure (66) for accommodating elements of said force application mechanism (10), and
a secondary retaining structure (68) for preventing at least one of said elements of said force application mechanism (10) from coming off of said lid lifter (4) in case of a failure of said first retaining structure (66),
wherein said secondary retaining structure (68) is fixed to at least said first end portion (62) and/or said second end portion (64) of said one of said first and second links (6) on which said force application mechanism (10) is provided.

2. Lid lifter (4) according to claim 1, wherein said secondary retaining structure (68) comprises an encasing portion (70; 72) at least partially encasing said primary retaining structure (66).

3. Lid lifter (4) according to claim 2, wherein said secondary retaining structure (68) is integrally formed with said primary retaining structure (66), preferably by co-injection.

4. Lid lifter (4) according to claim 2, wherein said encasing portion (72) comprises a fabric material or an elastic material, said fabric material being preferably stretchable.

5. Lid lifter according to one of the preceding claims, wherein at least said second end portion (64) is reinforced.

6. Lid lifter according to one of the preceding claims, wherein said second retaining structure (68) is at least partially made from an elastic material having a Young's modulus smaller than the Young's modulus of a material of said first retaining structure.

7. Lid lifter according to one of the preceding claims, wherein said secondary retaining structure comprises a coupling portion (14; 16) for coupling said at least one of said elements (12; 18) of said force application mechanism (10) to said second end portion.

8. Lid lifter according to claim 7, wherein said coupling portion (14) is integrally formed, preferably in a hook-like manner, in said at least one of said elements of said force application mechanism, preferably in a spring (12), and is engaged with said second end portion (64).

9. Lid lifter according to claim 7, wherein said coupling portion (16) is adapted to couple said at least one of said elements (18) of said force application mechanism (10) such that a movement of said at least one of said elements (18) is allowed to a predetermined extent and a further movement is blocked.

10. Lid lifter according to claim 9, wherein said coupling portion (16) comprises a flexible force transfer member adapted to transfer a tensile force only, said force transfer member having a predetermined length and being coupled to said second end portion (64) at one end and coupled to said at least one of said elements (18) of said force application mechanism (10) at its other end, wherein said force transfer member preferably comprises a wire.

11. Lid lifter according to one of the preceding claims, wherein said force application mechanism (10) comprises a spring (12), preferably a coil spring, and a force application member (18) urged by said spring (12) and being adapted so as to transfer an urging force of said spring (12) on a force receiving portion (86) of said one of said links (8) receiving said force.

12. Lid lifter according to claim 11, wherein said primary retaining structure (66) comprises a housing, preferably comprising two housing halves, wherein said housing comprises a guiding structure at least guiding said force application member (18) linearly movable towards and away from said first end portion (62).

13. Lid lifter according to claim 12, wherein said force application member (18) comprises a widening portion (18a) widening said force application member (18) in a direction perpendicular to the movement direction thereof so that a width dimension of said force application member (18) is enlarged to a predetermined dimension defining a minimum opening necessary in said primary retaining structure (66) for said force application member (18) to escape said primary retaining structure (66).

14. Roof box comprising
a base (22) and a lid (24) pivotally coupled to said base (22), said roof box (2) further comprising at least two lid lifters (4) according to one of the preceding claims for assisting an opening movement of said lid (24) with respect to said base (22).

## Patentansprüche

1. Deckelheber (4) zum Unterstützen des Öffnens eines Deckels (24) einer Dachbox (2) für ein Fahrzeug, wobei der Deckelheber (4) Folgendes umfasst: ein erstes Bindeglied (6) und ein zweites Bindeglied (8), die an einem jeweiligen ersten Endabschnitt (62, 82) drehbar miteinander verbunden sind und drehbar mit dem Deckel (24) oder einem Unterteil (22) der Dachbox (2) an einem jeweiligen zweiten Endabschnitt (64, 84) verbindbar sind,
einen Kraftaufbringmechanismus (10) zum Aufbringen einer Hilfskraft auf das erste Bindeglied (6) oder das zweite Bindeglied (8), wobei der Kraftaufbringmechanismus (10) an zumindest dem ersten und/oder dem zweiten Bindeglied (6, 8) vorgesehen ist,
eine primäre Rückhaltestruktur (66) zum Aufnehmen von Elementen des Kraftaufbringmechanismus (10), und
eine sekundäre Rückhaltestruktur (68), um zu verhindern, dass zumindest eines der Elemente des Kraftaufbringmechanismus (10) sich im Falle eines Ausfalls der ersten Rückhaltestruktur (66) von dem Deckelheber (4) löst,
wobei die sekundäre Rückhaltestruktur (68) an zumindest dem ersten Endabschnitt (62) und/oder dem zweiten Endabschnitt (64) des einen von dem ersten und zweiten Bindeglied (6) befestigt ist, auf denen der Kraftaufbringmechanismus (10) vorgesehen ist.

2. Deckelheber (4) nach Anspruch 1, wobei die sekundäre Rückhaltestruktur (68) einen Ummantelungsabschnitt (70; 72) umfasst, der die primäre Rückhaltestruktur (66) zumindest teilweise ummantelt.

3. Deckelheber (4) nach Anspruch 2, wobei die sekundäre Rückhaltestruktur (68) einstückig mit der primären Rückhaltestruktur (66) ausgebildet ist, vorzugsweise durch Sandwichspritzgießen (Co-Injection).

4. Deckelheber (4) nach Anspruch 2, wobei der Ummantelungsabschnitt (72) ein Gewebematerial oder ein elastisches Material umfasst, wobei das Gewebematerial vorzugsweise dehnbar ist.

5. Deckelheber nach einem der vorhergehenden Ansprüche, wobei zumindest der zweite Endabschnitt (64) verstärkt ist.

6. Deckelheber nach einem der vorhergehenden Ansprüche, wobei die zweite Rückhaltestruktur (68) zumindest teilweise aus einem elastischen Material mit einem Youngschen Modul hergestellt ist, der kleiner als der Youngsche Modul eines Materials der ersten Rückhaltestruktur ist.

7. Deckelheber nach einem der vorhergehenden Ansprüche, wobei die sekundäre Rückhaltestruktur einen Verbindungsabschnitt (14; 16) zum Verbinden des zumindest einen der Elemente (12; 18) des Kraftaufbringmechanismus (10) mit dem zweiten Endabschnitt umfasst.

8. Deckelheber nach Anspruch 7, wobei der Verbindungsabschnitt (14) in dem zumindest einen der Elemente des Kraftaufbringmechanismus, vorzugsweise in einer Feder (12), einstückig, vorzugsweise hakenartig, ausgebildet ist und mit dem zweiten Endabschnitt (64) in Eingriff steht.

9. Deckelheber nach Anspruch 7, wobei der Verbindungsabschnitt (16) angepasst ist, um das zumindest eine der Elemente (18) des Kraftaufbringmechanismus (10) so zu verbinden, dass eine Bewegung des zumindest einen der Elemente (18) in einem vorgegebenen Umfang erlaubt ist und eine weitere Bewegung blockiert wird.

10. Deckelheber nach Anspruch 9, wobei der Verbindungsabschnitt (16) ein flexibles Kraftübertragungselement umfasst, das nur zum Übertragen einer Zugkraft eingerichtet ist, wobei das Kraftübertragungselement eine vorgegebene Länge aufweist und mit dem zweiten Endabschnitt (64) an einem Ende verbunden ist und mit dem zumindest einen der Elemente (18) des Kraftaufbringmechanismus (10) an seinem anderen Ende verbunden ist, wobei das Kraftübertragungselement vorzugsweise einen Draht umfasst.

11. Deckelheber nach einem der vorhergehenden Ansprüche, wobei der Kraftaufbringmechanismus (10) eine Feder (12), vorzugsweise eine Schraubenfeder, und ein Kraftaufbringelement (18) umfasst, das von der Feder (12) gedrückt wird und so eingerichtet ist, dass eine Druckkraft der Feder (12) auf einen Kraftaufnahmeabschnitt (86) des einen der Bindeglieder (8), das die Kraft aufnimmt, übertragen wird.

12. Deckelheber nach Anspruch 11, wobei die primäre Rückhaltestruktur (66) ein Gehäuse umfasst, das vorzugsweise zwei Gehäusehälften umfasst, wobei das Gehäuse eine Führungsstruktur umfasst, die zumindest das Kraftaufbringelement (18) zu und von dem ersten Endabschnitt (62) weg linear beweglich führt.

13. Deckelheber nach Anspruch 12, wobei das Kraftaufbringelement (18) einen Verbreiterungsabschnitt (18a) umfasst, der das Kraftaufbringelement (18) in einer zu seiner Bewegungsrichtung senkrechten Richtung verbreitert, so dass eine Breitenabmessung des Kraftaufbringelements (18) auf eine vorgegebene Abmessung vergrößert ist, die eine minimale Öffnung definiert, die in der primären Rückhaltestruktur (66) für das Kraftaufbringelement (18) erforderlich ist, um sich von der primären Rückhaltestruktur (66) zu lösen

14. Dachbox, umfassend
ein Unterteil (22) und einen Deckel (24), der schwenkbar mit dem Unterteil (22) verbunden ist, wobei die Dachbox (2) ferner zumindest zwei Deckelheber (4) gemäß einem der vorhergehenden Ansprüche zum Unterstützen einer Öffnungsbewegung des Deckels (24) in Bezug auf das Unterteil (22) umfasst.

## Revendications

1. Poussoir de couvercle (4) pour aider à l'ouverture d'un couvercle (24) d'un coffre de toit (2) pour véhicule, ledit poussoir de couvercle (4) comprenant une première pièce de liaison (6) et une seconde pièce de liaison (8) couplées de manière rotative l'une à l'autre sur une première partie d'extrémité (62, 82) respective et pouvant être couplées de manière rotative audit couvercle (24) ou à une base (22) dudit coffre de toit (2) sur une seconde partie d'extrémité (64, 84) respective,
un mécanisme d'application de force (10) destiné à appliquer une force d'assistance sur ladite première pièce de liaison (6) ou ladite seconde pièce de liaison (8), ledit mécanisme d'application de force (10) étant prévu sur au moins une desdites première et seconde pièces de liaison (6, 8),
une structure de retenue primaire (66) destinée à recevoir des éléments dudit mécanisme d'application de force (10), et
une structure de retenue secondaire (68) destinée à empêcher qu'au moins un desdits éléments dudit mécanisme d'application de force (10) ne se détache dudit poussoir de couvercle (4) en cas de défaillance de ladite première structure de retenue (66),
dans lequel ladite structure de retenue secondaire (68) est fixée sur au moins ladite première partie d'extrémité (62) et/ou ladite seconde partie d'extrémité (64) de ladite une desdites première et seconde pièces de liaison (6), sur laquelle est prévu ledit mécanisme d'application de force (10).

2. Poussoir de couvercle (4) selon la revendication 1, dans lequel ladite structure de retenue secondaire (68) comprend une partie d'enfermement (70 ; 72) enfermant au moins partiellement ladite structure de retenue primaire (66).

3. Poussoir de couvercle (4) selon la revendication 2, dans lequel ladite structure de retenue secondaire (68) est formée d'un seul tenant avec ladite structure de retenue primaire (66), de préférence par co-injection.

4. Poussoir de couvercle (4) selon la revendication 2, dans lequel ladite partie d'enfermement (72) comprend un matériau textile ou un matériau élastique, ledit matériau textile étant de préférence extensible.

5. Poussoir de couvercle selon l'une des revendications précédentes, dans lequel au moins ladite seconde partie d'extrémité (64) est renforcée.

6. Poussoir de couvercle selon l'une des revendications précédentes, dans lequel ladite seconde structure de retenue (68) est au moins partiellement constituée d'un matériau élastique présentant un module de Young inférieur au module de Young d'un matériau de ladite première structure de retenue.

7. Poussoir de couvercle selon l'une des revendications précédentes, dans lequel ladite structure de retenue secondaire comprend une partie de couplage (14 ; 16) destinée au couplage dudit au moins un desdits éléments (12 ; 18) dudit mécanisme d'application de force (10) à ladite seconde partie d'extrémité.

8. Poussoir de couvercle selon la revendication 7, dans lequel ladite partie de couplage (14) est formée d'un seul tenant, de préférence de manière similaire à un crochet, dans ledit au moins un desdits éléments dudit mécanisme d'application de force, de préférence dans un ressort (12), et est en prise avec ladite seconde partie d'extrémité (64).

9. Poussoir de couvercle selon la revendication 7, dans lequel ladite partie de couplage (16) est conçue pour coupler ledit au moins un desdits éléments (18) dudit mécanisme d'application de force (10) de telle sorte qu'un mouvement dudit au moins un desdits éléments (18) est autorisé jusqu'à un point prédéfini et qu'un mouvement plus avant est bloqué.

10. Poussoir de couvercle selon la revendication 9, dans lequel ladite partie de couplage (16) comprend un organe flexible de transfert de force conçu pour transférer uniquement une force de traction, ledit organe de transfert de force présentant une longueur prédéfinie et étant couplé par une extrémité à ladite seconde partie d'extrémité (64) et couplé par son autre extrémité audit au moins un desdits éléments (18) dudit mécanisme d'application de force (10), ledit organe de transfert de force comprenant de préférence un fil.

11. Poussoir de couvercle selon l'une des revendications précédentes, dans lequel ledit mécanisme d'application de force (10) comprend un ressort (12), de préférence un ressort hélicoïdal, et un organe d'application de force (18) poussé par ledit ressort (12) et conçu pour transférer une force de poussée dudit ressort (12) sur une partie de réception de force (86) de ladite une desdites pièces de liaison (8) recevant ladite force.

12. Poussoir de couvercle selon la revendication 11, dans lequel ladite structure de retenue primaire (66) comprend un boîtier, comprenant de préférence deux moitiés de boîtier, ledit boîtier comprenant une structure de guidage guidant au moins ledit organe d'application de force (18) selon un mouvement linéaire vers ladite première partie d'extrémité (62) et inversement.

13. Poussoir de couvercle selon la revendication 12, dans lequel ledit organe d'application de force (18) comprend une partie d'élargissement (18a) élargissant ledit organe d'application de force (18) dans une direction perpendiculaire à la direction du mouvement de celui-ci de telle sorte qu'une dimension en largeur dudit organe d'application de force (18) est agrandie à une dimension prédéfinie définissant une ouverture minimale nécessaire dans ladite structure de retenue primaire (66) pour que ledit organe d'application de force (18) se dégage de ladite structure de retenue primaire (66).

14. Coffre de toit comprenant
une base (22) et un couvercle (24) couplé de manière pivotante à ladite base (22), ledit coffre de toit (2) comprenant en outre au moins deux poussoirs de couvercle (4) selon l'une des revendications précédentes pour aider à un mouvement d'ouverture dudit couvercle (24) par rapport à ladite base (22).
